# EUROPEAN PATENT APPLICATION

(11) **EP 3 012 557 A1**
(43) Date of publication of application: **27.04.2016**
(21) Application number: 13887424.3
(22) Date of filing: 19.06.2013
(51) Int. Cl.: F25B 1/00, C09K 5/04

(54) **REFRIGERATION CYCLE DEVICE**

(71) Applicant: Mitsubishi Electric Corporation, Tokyo 100-8310 (JP)
(72) Inventor: OKAZAKI, Takashi, Tokyo 100-8310 (JP); MAEYAMA, Hideaki, Tokyo 100-8310 (JP); KATO, Yohei, Tokyo 100-8310 (JP); UGAJIN, Yuki, Tokyo 100-8310 (JP)
(74) Representative: Pfenning, Meinig & Partner mbB
(86) International application number: PCT/JP2013/066866
(87) International publication number: WO 2014/203354

(57) **Abstract**

A refrigeration cycle apparatus includes a refrigerant passage including a compressor 1, a condenser 2, an expansion valve 3, and an evaporator 4 and a discharge-temperature detecting unit 11 detecting a discharge refrigerant temperature of the compressor. The refrigeration cycle apparatus uses an ethylene-based hydrofluorocarbon or a mixture containing an ethylene-based hydrofluorocarbon as refrigerant. The refrigeration cycle apparatus further includes a discharge-refrigerant-temperature control unit controlling the discharge refrigerant temperature detected by the discharge-temperature detecting unit 11 to a first specified level or lower.

## Description

### Technical Field

This invention relates to refrigeration cycle apparatuses that use ethylene-based hydrofluorocarbons and mixtures containing ethylene-based hydrofluorocarbons as refrigerant.

### Background Art

In the field of car air-conditioning apparatuses, HFO-1234yf (CF₃CF=CH₂), which is a propylene-based hydrofluorocarbon, is used as a low-global-warming-potential (GWP) refrigerant.

Propylene-based hydrofluorocarbons, which contain a double bond, generally have the property of decomposing and polymerizing readily at elevated temperatures due to the presence of a double bond. Accordingly, a compressor has been disclosed in which the surfaces of metal sliding parts, which are heated to elevated temperatures, are formed with nonmetallic components to inhibit the decomposition and polymerization of refrigerant (see Patent Literature 1).

Tetrafluoroethylene (C₂F₄), which is an ethylene derivative similar in molecular structure to ethylene-based hydrofluorocarbons, is useful as a monomer for the production of fluoropolymers and fluoroelastomers, which have superior properties such as high heat resistance and chemical resistance. It is known, however, that polymerization inhibitors must be added to tetrafluoroethylene during production to inhibit polymerization since it polymerizes extremely readily (see Patent Literature 2).

### Citation List

### Patent Literature

Patent Literature 1: Japanese Unexamined Patent Application Publication No. 2009-299649
Patent Literature 2: Japanese Unexamined Patent Application Publication No. 11-246447

### Summary of Invention

### Technical Problem

HFO-1234yf refrigerant, which is a propylene-based hydrofluorocarbon, has a high normal boiling point, that is, -29 degrees C; therefore, it has a lower operating pressure and a lower refrigeration capacity per suction volume than conventional refrigerant for use in stationary air-conditioning apparatuses, such as R410A refrigerant (which has a normal boiling point of -51 degrees C). To achieve a refrigeration capacity similar to that of R410A refrigerant using HFO-1234yf refrigerant in stationary air-conditioning apparatuses, the volume flow rate of the refrigerant must be increased. This, however, results in problems associated with increased compressor displacement and other problems such as increased pressure loss and decreased efficiency due to increased volume flow rate.

Therefore, low-GWP refrigerant having low normal boiling points is suitable for use in stationary air-conditioning apparatuses. It is commonly known that refrigerant having molecular structures containing fewer carbon atoms has lower boiling points.

The inventors have conducted research on a trial-and-error basis on compounds having molecular structures containing fewer carbon atoms than conventional propylene-based hydrofluorocarbons, which contain three carbon atoms. Among various compounds, the inventors have attempted to use ethylene-based hydrofluorocarbons, which contain two carbon atoms, as refrigerant.

The use of an ethylene-based hydrofluorocarbon as refrigerant would provide refrigerant having a low boiling point similar to that of conventional R410A refrigerant.

Unfortunately, ethylene-based hydrofluorocarbons decompose and polymerize more readily than propylene-based hydrofluorocarbons since they are more reactive and thermally and chemically less stable. This presents a problem in that it is difficult to inhibit decomposition and polymerization simply by forming the surfaces of sliding parts of a compressor with nonmetallic components, as disclosed in Patent Literature 1.

Ethylene-based hydrofluorocarbons, when used as refrigerant, decompose and polymerize readily upon production and also decompose and polymerize during storage. To inhibit the decomposition and polymerization of ethylene-based hydrofluorocarbon refrigerant during storage, polymerization inhibitors such as those shown in Patent Literature 2 must be added during production to inhibit the polymerization of the refrigerant.

However, even if a polymerization inhibitor is added to a refrigerant, the refrigerant repeatedly undergoes phase changes between liquid and gas during circulation through a refrigeration cycle and vaporizes together with the polymerization inhibitor on sliding parts and motor windings of a compressor, which are heated to elevated temperatures and thus readily induce polymerization.

As a result, the polymerization inhibitor disappears together with vaporized refrigerant from the sliding parts and motor windings of the compressor without spreading to high-temperature regions and is therefore not sufficiently effective in inhibiting the polymerization of the refrigerant.

In particular, as metal sliding parts slide over each other, the sliding surfaces are heated to elevated temperatures to activate the metal in the sliding surfaces. This presents a problem in that the activated metal acts as a reaction catalyst to promote the decomposition of ethylene-based hydrofluorocarbons and, if the polymerization inhibitor is not sufficiently effective, also promotes the polymerization of the decomposition product.

Thus, it is difficult to use ethylene-based hydrofluorocarbons as refrigerant in refrigeration cycle apparatuses because of their unstable physical properties at elevated temperatures.

In view of the foregoing problems, an object of the present invention is to provide a refrigeration cycle apparatus that uses an ethylene-based hydrofluorocarbon or a mixture containing an ethylene-based hydrofluorocarbon as refrigerant and that maintains the discharge temperature of a compressor, which is heated to the highest temperature in the refrigeration cycle, at low level to inhibit the decomposition and polymerization of the refrigerant. Solution to Problem

A refrigeration cycle apparatus according to this invention includes a refrigerant passage including a compressor, a condenser, an expansion valve, and an evaporator and a discharge-temperature detecting unit detecting a discharge refrigerant temperature of the compressor. The refrigeration cycle apparatus uses an ethylene-based hydrofluorocarbon or a mixture containing an ethylene-based hydrofluorocarbon as refrigerant. The refrigeration cycle apparatus further includes a discharge-refrigerant-temperature control unit controlling the discharge refrigerant temperature detected by the discharge-temperature detecting unit to a first specified level or lower.

### Advantageous Effects of Invention

The refrigeration cycle apparatus according to this invention, which includes the discharge-temperature reducing unit that reduces the discharge temperature of the compressor, can reduce an increase in the temperature of sliding parts of a compressor element to inhibit the activation of metal in the sliding surfaces. This inhibits the decomposition of an ethylene-based hydrofluorocarbon or a mixture containing an ethylene-based hydrofluorocarbon due to activated metal and also inhibits the polymerization of a decomposition product of the refrigerant. Ethylene-based hydrofluorocarbons and mixtures containing ethylene-based hydrofluorocarbons can thus be used as refrigerant.

### Brief Description of Drawings

[Fig. 1] Fig. 1 is a diagram showing a refrigeration cycle apparatus according to Embodiment 1 of this invention.
[Fig. 2] Fig. 2 is a table showing examples of ethylene-based hydrofluorocarbons for use as refrigerant in refrigeration cycle apparatuses according to Embodiments 1 to 5 of this invention.
[Fig. 3] Fig. 3 is a graph showing the relationship between discharge refrigerant temperature and the decomposition rate of refrigerant in Embodiment 1 of this invention.
[Fig. 4] Fig. 4 is a diagram showing a refrigeration cycle apparatus including an injection circuit according to Embodiment 2 of this invention.
[Fig. 5] Fig. 5 is a diagram showing a refrigeration cycle apparatus including a two-stage compressor circuit according to Embodiment 3 of this invention.
[Fig. 6] Fig. 6 is a diagram showing a refrigeration cycle apparatus including a two-stage compressor/injection circuit according to Embodiment 4 of this invention.
[Fig. 7] Fig. 7 is a diagram showing a dual refrigeration cycle apparatus according to Embodiment 5 of this invention.

### Description of Embodiments

Embodiments of the present invention will now be described with reference to the drawings, although the embodiments described below are not intended to limit the scope of the invention.

### Embodiment 1

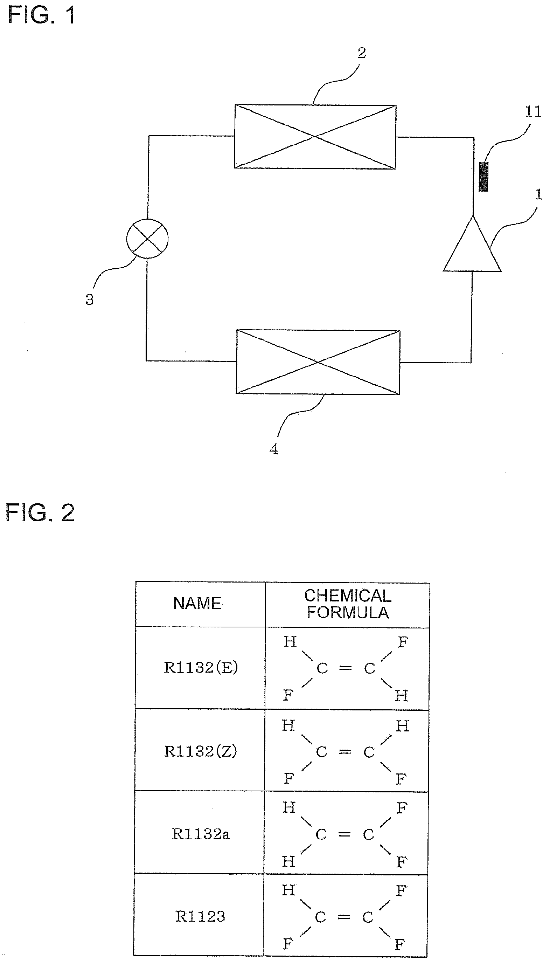

Fig. 1 is a diagram showing a refrigeration cycle apparatus according to Embodiment 1 of the present invention. The refrigeration cycle apparatus according to Embodiment 1 includes a first compressor 1, a condenser 2, a first expansion valve 3, and an evaporator 4. The refrigeration cycle apparatus further includes a discharge-temperature detecting unit 11 disposed near the outlet of the first compressor 1 to detect discharge refrigerant temperature (Td).

The refrigerant for circulation through the above refrigerant circuit is an ethylene-based hydrofluorocarbon, which is a low-boiling-point refrigerant, as is R410A, or a mixture containing an ethylene-based hydrofluorocarbon. Fig. 2 lists examples of ethylene-based hydrofluorocarbons for use as refrigerant in the refrigeration cycle apparatus according to this embodiment. Although trans-1,2 difluoroethylene (R1132(E)) is used as refrigerant in this embodiment, the ethylene-based hydrofluorocarbons listed in Fig. 2 and other ethylene-based hydrofluorocarbons can also be used. Specific examples of ethylene-based hydrofluorocarbons other than R1132(E) include cis-1,2 difluoroethylene (R1132(Z)), 1,1 difluoroethylene (R1132a), 1,1,2-trifluoroethylene (R1123), fluoroethylene (R1141), and those in which one of the fluorine (F) atoms is replaced by other halogen elements (Cl, Br, I, and At).

The first expansion valve 3 used in this embodiment is an electronic expansion valve, which allows the flow rate to be adjusted depending on the valve opening degree. The first expansion valve 3, however, need not necessarily be an electronic expansion valve, but may instead be a thermostatic expansion valve, which includes a spring whose force is adjusted and a temperature-sensing bulb and controls the discharge refrigerant temperature (Td) to a predetermined level. Although the refrigeration cycle apparatus according to this embodiment is illustrated as a cooling-only system, it need not necessarily be cooling-only, but may be configured to switch between cooling and heating modes using a four-way valve.

The operation will now be described. High-temperature, high-pressure refrigerant gas discharged from the first compressor 1 is condensed and liquefied by the condenser 2. After the refrigerant undergoes a reduction in pressure through the first expansion valve 3, it is evaporated and gasified by the evaporator 4 and is returned to the first compressor 1. The refrigerant temperature is highest inside the first compressor 1, where the temperature needs to be controlled to below the critical temperature at which the decomposition and polymerization of the refrigerant occur.

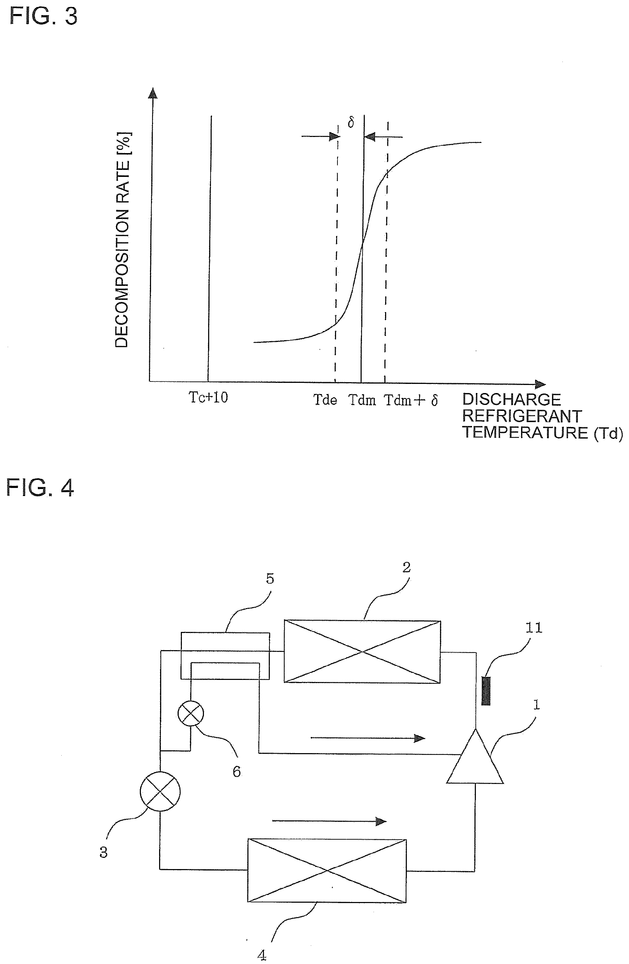

Fig. 3 shows the relationship between the discharge refrigerant temperature (Td) and the decomposition rate of the refrigerant. The decomposition rate of the refrigerant generally tends to rise sharply in a certain temperature range. In Fig. 3, the decomposition rate rises in the temperature range between the dashed lines. This temperature range is represented as Tdm±δ, where Tdm is the median decomposition temperature, which is the discharge refrigerant temperature (Td) corresponding to the median decomposition rate of the refrigerant. The decomposition onset temperature Tde, which is the lower limit of the above temperature range, is specified as a temperature lower than Tdm by a predetermined amount δ. Depending on the operating pressure (high pressure), δ is typically about 10 degrees C. The discharge refrigerant temperature (Td) of the compressor needs to be lower than the decomposition onset temperature (Tde = Tdm - δ), which is the lower limit of the above temperature range.

Ethylene-based hydrofluorocarbon refrigerant, a propylene-based hydrofluorocarbon refrigerant (R1234yf), and R410A refrigerant will be compared for the temperature difference between the discharge refrigerant temperature (Td) during normal operation and the decomposition onset temperature (Tde) of each kind of refrigerant.

The discharge refrigerant temperature (Td) during normal operation for trans-1,2 difluoroethylene (R1132(E)) and cis-1,2 difluoroethylene (R1132(Z)), which are ethylene-based hydrofluorocarbon refrigerant, is slightly lower than that for R410A and is slightly higher than that for R1234yf (for example, depending on the operating conditions, about 100 degrees C for R410A, about 80 degrees C for R1234yf, and about 90 degrees C for R1132).

The decomposition onset temperature (Tde) of the ethylene-based hydrofluorocarbon refrigerant is lower than that of R1234yf refrigerant, which has a molecular structure containing a double bond, as does R1132 refrigerant, by about 10 to 20 degrees C (for example, 180 degrees C for R410A, 120 degrees C for R1234yf, and 100 degrees C for R1132).

The temperature difference (ΔTde = Tde - Td) between the decomposition onset temperature (Tde) and the discharge refrigerant temperature (Td) during normal operation for the ethylene-based hydrofluorocarbon refrigerant is smaller than those for other conventional refrigerant. That is, the discharge refrigerant temperature (Td) during normal operation for the ethylene-based hydrofluorocarbon refrigerant is closer to the decomposition onset temperature (Tde) of the refrigerant (in the above example, ΔTde is 80 degrees C for R410A, 40 degrees C for R1234yf, and 10 degrees C for R1132).

Thus, ethylene-based hydrofluorocarbon refrigerant has smaller margins of temperature difference between the discharge refrigerant temperature (Td) and the refrigerant decomposition temperature (Tde) and require more strict discharge refrigerant temperature (Td) control than conventional refrigerant, with consideration given to the decomposition of the refrigerant.

The lower limit (T2) of the discharge refrigerant temperature (Td) is specified as condensation temperature Tc + 10 (degrees C) to prevent excessive backflow into the first compressor 1.

In Embodiment 1, the discharge refrigerant temperature (Td) is detected as the representative temperature of the high-temperature refrigerant by the discharge-temperature detecting unit 11, and the refrigeration cycle apparatus is controlled such that the discharge refrigerant temperature (Td) falls within the range of T2 < Td < Tde. The control actuator is, for example, the rotation speed of the first compressor 1 or the opening degree of the first expansion valve 3.

Specifically, if the discharge refrigerant temperature (Td) exceeds the decomposition onset temperature (Tde), the refrigeration cycle apparatus is controlled to decrease the rotation speed of the first compressor 1 or to increase the opening degree of the first expansion valve 3. If the discharge refrigerant temperature (Td) falls below the lower limit (T2), the refrigeration cycle apparatus is controlled to increase the rotation speed of the first compressor 1 or to decrease the opening degree of the first expansion valve 3.

Although not shown in Fig. 1, the discharge refrigerant temperature (Td) can also be controlled depending on the rotation speed of a fan that blows air across the evaporator 4 or the rotation speed of a fan that blows air across the condenser 2.

As discussed above, this embodiment allows the discharge refrigerant temperature (Td) of the refrigeration cycle apparatus, which uses an ethylene-based hydrofluorocarbon refrigerant, to be maintained at low level. The decomposition of the refrigerant with increasing temperature can thus be inhibited, and ethylene-based hydrofluorocarbon refrigerant can be applied to the refrigeration cycle apparatus in a stable condition.

### Embodiment 2

Fig. 4 is a diagram showing a refrigeration cycle apparatus according to Embodiment 2 of the present invention. In addition to the configuration of Embodiment 1, which includes the first compressor 1, the condenser 2, the first expansion valve 3, and the evaporator 4, the refrigeration cycle apparatus according to Embodiment 2 includes an injection circuit including a subcooler 5 and a second expansion valve 6. Although the subcooler 5 is provided in the illustrated configuration, it may be omitted; if the subcooler 5 is not provided, a liquid injection circuit is formed.

The operation will now be described. High-temperature, high-pressure refrigerant gas discharged from the first compressor 1 is condensed and liquefied by the condenser 2 and is further subcooled by the subcooler 5. After the subcooled liquid refrigerant undergoes a reduction in pressure through the first expansion valve 3, it is evaporated and gasified by the evaporator 4 and is returned to the first compressor 1.

Part of the refrigerant (injection refrigerant) leaving the subcooler 5 undergoes a reduction in pressure through the second expansion valve 6 and flows into the low-pressure side of the subcooler 5, where the refrigerant is evaporated to a certain extent into a two-phase gas-liquid state. The two-phase gas-liquid refrigerant subcools the liquid refrigerant leaving the condenser 2 and is taken into the first compressor 1.

The refrigerant temperature is highest inside the first compressor 1, where the temperature is controlled to below the decomposition temperature at which the decomposition and polymerization of the refrigerant occur by controlling the flow rate of the two-phase gas-liquid refrigerant injected into the first compressor 1 with the second expansion valve 6.

Specifically, in Embodiment 2, the discharge refrigerant temperature (Td) is detected as the representative temperature of the high-temperature refrigerant by the discharge-temperature detecting unit 11, and the flow rate of the injection refrigerant is controlled depending on the opening degree of the second expansion valve 6 such that the discharge refrigerant temperature (Td) falls within the range of T2 < Td < Tde.

Embodiment 2 allows the injection flow rate to be adjusted to reduce the discharge temperature of the first compressor 1. The decomposition and polymerization of the refrigerant can thus be inhibited, and ethylene-based hydrofluorocarbon refrigerant can be applied to the refrigeration cycle apparatus in a stable condition.

### Embodiment 3

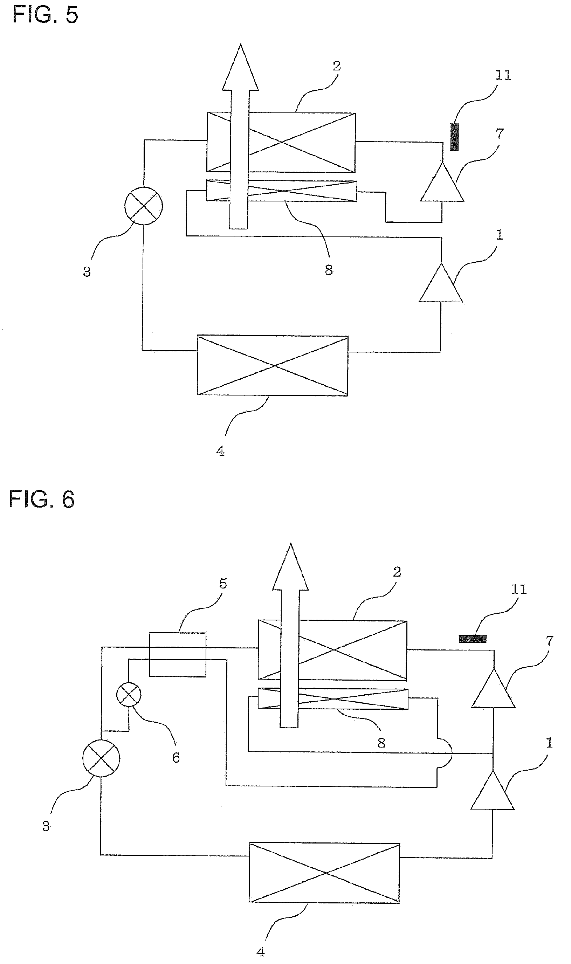

Fig. 5 is a diagram showing a refrigeration cycle apparatus according to Embodiment 3 of the present invention. In addition to the configuration of Embodiment 1, which includes the first compressor 1, the condenser 2, the first expansion valve 3, and the evaporator 4, the refrigeration cycle apparatus according to Embodiment 3 includes a second compressor 7 and an intercooler 8, thereby forming a two-stage compressor circuit.

The intercooler 8, in which the refrigerant temperature is low, is disposed on the windward side of the condenser 2, and the condenser 2 is disposed on the leeward side. It should be understood that the condenser 2 and the intercooler 8 may be disposed in parallel such that both heat exchangers exchange heat with fresh air if there is enough space in an outdoor unit (not shown). Although the intercooler 8 and the condenser 2 are separated in the illustrated example, they need not necessarily be separated; an integrated multi-stage heat exchanger may be provided in which the first stage is the intercooler 8 and the second stage (and subsequent stages) is the condenser 2.

The operation will now be described. High-temperature, high-pressure refrigerant gas discharged from the first compressor 1 is cooled to a certain extent by the intercooler 8 and is taken into the second compressor 7. High-temperature, high-pressure refrigerant gas discharged from the second compressor 7 is condensed and liquefied by the condenser 2. After the liquid refrigerant expands through the first expansion valve 3, it is evaporated and gasified by the evaporator 4 and is returned to the first compressor 1.

In Embodiment 3, as in Embodiment 1, the discharge refrigerant temperature (Td) is detected as the representative temperature of the high-temperature refrigerant by the discharge-temperature detecting unit 11, and the refrigeration cycle apparatus is controlled such that the discharge refrigerant temperature (Td) falls within the range of T2 < Td < Tde. The control actuator is, for example, the rotation speed of the first compressor 1, the rotation speed of the second compressor 7, or the opening degree of the first expansion valve 3.

Embodiment 3, in which a two-stage compressor configuration including two compressors connected in series is provided, allows the compression ratios of the first compressor 1 and the second compressor 7 to be reduced to improve the compressor efficiency and thus allows the discharge temperature at the outlet of the second compressor 7 to be maintained at low level. Also provided is the intercooler 8, which can reduce the temperature of the gas refrigerant taken into the second compressor 7 and can thereby reduce the increase in the discharge refrigerant temperature (Td) of the second compressor 7. The decomposition and polymerization of the refrigerant can thus be inhibited, and ethylene-based hydrofluorocarbon refrigerant can be applied to the refrigeration cycle apparatus in a stable condition.

### Embodiment 4

Fig. 6 is a diagram showing a refrigeration cycle apparatus according to Embodiment 4 of the present invention. In addition to the configuration of the refrigeration cycle apparatus according to Embodiment 3, the refrigeration cycle apparatus according to Embodiment 4 includes an injection circuit including a subcooler 5 and a second expansion valve 6, thereby forming a two-stage compressor circuit. The injection circuit is connected to an intermediate-pressure portion near the inlet of the second compressor 7 via the intercooler 8.

The operation will now be described. High-temperature, high-pressure refrigerant gas discharged from the second compressor 7 is condensed and liquefied by the condenser 2 and is further subcooled by the subcooler 5. After the subcooled liquid refrigerant undergoes a reduction in pressure through the first expansion valve 3, it is evaporated and gasified by the evaporator 4 and is taken into the first compressor 1.

Part of the refrigerant (injection refrigerant) leaving the subcooler 5 undergoes a reduction in pressure through the second expansion valve 6 and flows into the low-pressure side of the subcooler 5, where the refrigerant is evaporated to a certain extent into a two-phase gas-liquid state. The two-phase gas-liquid refrigerant subcools the liquid refrigerant leaving the condenser 2 and flows into the intercooler 8. The injection refrigerant cooled by the intercooler 8 merges into and cools the high-temperature, high-pressure gas refrigerant discharged from the first compressor 1 and is taken into the second compressor 7.

In Embodiment 4, as in Embodiment 2, the discharge refrigerant temperature (Td) is detected as the representative temperature of the high-temperature refrigerant by the discharge-temperature detecting unit 11, and the flow rate of the injection refrigerant is controlled depending on the opening degree of the second expansion valve 6 such that the discharge refrigerant temperature (Td) falls within the range of T2 < Td < Tde.

Embodiment 4, in which a two-stage compressor configuration including two compressors connected in series is provided, allows the compression ratios of the first compressor 1 and the second compressor 7 to be reduced to improve the compressor efficiency and thus allows the discharge refrigerant temperature (Td) at the outlet of the second compressor 7 to be maintained at low level.

Also provided is the intercooler 8, which cools the injection refrigerant before it merges into the intermediate-pressure refrigerant in the two-stage compressor configuration. The intercooler 8 can reduce the temperature of the gas refrigerant taken into the second compressor 7 and can thereby further reduce the increase in the discharge refrigerant temperature (Td) of the second compressor 7.

The decomposition and polymerization of the refrigerant can thus be inhibited, and ethylene-based hydrofluorocarbon refrigerant can be applied to the refrigeration cycle apparatus in a stable condition.

### Embodiment 5

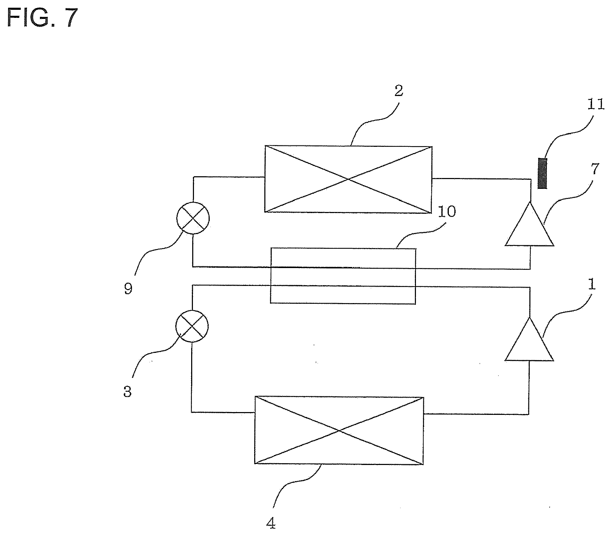

Fig. 7 is a diagram showing a refrigeration cycle apparatus according to Embodiment 5. In addition to the configuration of Embodiment 1, which includes the first compressor 1, the first expansion valve 3, and the evaporator 4, the refrigeration cycle apparatus according to Embodiment 5 includes a second compressor 7, a third expansion valve 9, and a cascade condenser 10 that exchanges heat between refrigerant on the high-temperature side and refrigerant on the low-temperature side, thereby forming a dual compressor circuit.

This embodiment illustrates an example where an ethylene-based hydrofluorocarbon or a mixture containing an ethylene-based hydrofluorocarbon is used on the high-temperature side. In this case, any refrigerant may be used on the low-temperature side since the discharge temperature of the first compressor 1 is maintained at low level.

The cascade condenser 10 is, for example, a plate heat exchanger. The heat transfer area is selected such that the refrigeration cycle operation is optimized on the high-temperature and low-temperature sides, specifically, such that the compression ratio of the high-temperature refrigeration cycle is substantially equal to that of the low-temperature refrigeration cycle.

The operation will now be described. In the low-temperature cycle operation, high-temperature, high-pressure refrigerant gas discharged from the first compressor 1 is condensed by the cascade condenser 10. After the refrigerant expands through the first expansion valve 3, it is evaporated by the evaporator 4 and is returned to the first compressor 1. In the high-temperature cycle operation, the refrigerant compressed by the second compressor 7 is condensed by the condenser 2. After the refrigerant expands through the third expansion valve 9, it is evaporated by the cascade condenser 10 and is taken back into the second compressor 7.

In Embodiment 5, as in Embodiment 1, the discharge refrigerant temperature (Td) is detected as the representative temperature of the high-temperature refrigerant by the discharge-temperature detecting unit 11, and the refrigeration cycle apparatus is controlled such that the discharge refrigerant temperature (Td) falls within the range of T2 < Td < Tde. The control actuator is, for example, the rotation speed of the first compressor 1 or the second compressor 7, or the opening degree of the first expansion valve 3 or the third expansion valve 9.

This embodiment, in which a dual refrigeration cycle configuration is provided, allows the compression ratios of the first compressor and the second compressor to be reduced to improve the compressor efficiency and thus allows the discharge temperature at the outlet of the second compressor 7 to be reduced. The decomposition and polymerization of the refrigerant can thus be inhibited, and ethylene-based hydrofluorocarbon refrigerant can be applied to the refrigeration cycle apparatus in a stable condition.

### Reference Signs List

1 first compressor 2 condenser 3 first expansion valve 4 evaporator 5 subcooler 6 second expansion valve 7 second compressor 8 intercooler 9 third expansion valve 10 cascade condenser 11 discharge-temperature detecting unit

## Claims

1. A refrigeration cycle apparatus comprising a refrigerant passage including a compressor, a condenser, an expansion valve, and an evaporator and a discharge-temperature detecting unit configured to detect a discharge refrigerant temperature of the compressor, wherein
the refrigeration cycle apparatus uses an ethylene-based hydrofluorocarbon or a mixture containing an ethylene-based hydrofluorocarbon as refrigerant, and
the refrigeration cycle apparatus further comprises a discharge-refrigerant-temperature control unit configured to control the discharge refrigerant temperature detected by the discharge-temperature detecting unit to be a first specified level or lower.

2. The refrigeration cycle apparatus of claim 1, wherein the first specified level is specified as a threshold lower than a median decomposition temperature corresponding to a median decomposition rate of the refrigerant by a predetermined amount.

3. The refrigeration cycle apparatus of claim 1 or 2, wherein the discharge-refrigerant-temperature control unit controls at least one of a rotation speed of the compressor and an opening degree of the expansion valve.

4. The refrigeration cycle apparatus of any one of claims 1 to 3, further comprising an injection circuit splitting off a flow of condensed liquid refrigerant from an outlet side of the condenser of the refrigerant passage and connecting to the compressor, the injection circuit including a second expansion valve configured to control a flow rate of the refrigerant, wherein
the discharge-refrigerant-temperature control unit controls at least an opening degree of the second expansion valve.

5. The refrigeration cycle apparatus of claim 4, wherein
the compressor is a two-stage compressor including a first compressor and a second compressor connected in series in an order in which the refrigerant flows through the refrigerant passage, and
the injection circuit is connected to the refrigerant passage between the first compressor and the second compressor, the discharge-temperature detecting unit configured to detect a discharge refrigerant temperature of the second compressor.

6. The refrigeration cycle apparatus of claim 4 or 5, wherein the injection circuit includes a subcooler configured to subcool liquid refrigerant on the outlet side of the condenser.

7. The refrigeration cycle apparatus of any one of claims 4 to 6, wherein the injection circuit further includes an intercooler configured to cool the refrigerant.

8. The refrigeration cycle apparatus of any one of claims 1 to 3, wherein
the compressor is a two-stage compressor including a first compressor and a second compressor connected in series in an order in which the refrigerant flows through the refrigerant passage, and
the refrigeration cycle apparatus further comprises an intercooler disposed on an outlet side of the first compressor and cooling the refrigerant, the refrigerant cooled by the intercooler being supplied to the second compressor, the discharge-temperature detecting unit being configured to detect a discharge refrigerant temperature of the second compressor.

9. The refrigeration cycle apparatus of any one of claims 1 to 3, wherein the refrigeration cycle apparatus comprises a cascade refrigeration cycle in which a refrigerant passage including the compressor, the condenser, the expansion valve, and the discharge-temperature detecting unit serves as a high-temperature refrigeration cycle and in which the evaporator serves as a cascade condenser.

10. The refrigeration cycle apparatus of any one of claims 1 to 9, wherein the discharge-refrigerant-temperature control unit controls the discharge refrigerant temperature to be a second specified level or higher, the second specified level being lower than the first specified level.

11. The refrigeration cycle apparatus of any one of claims 1 to 10, wherein the ethylene-based hydrofluorocarbon comprises any one of fluoroethylene (R1141), trans-1,2 difluoroethylene (R1132(E)), cis-1,2 difluoroethylene (R1132(Z)), 1,1 difluoroethylene (R1132a), and 1,1,2 trifluoroethylene (R1123).
